(19) Europäisches Patentamt
European Patent Office
Office européen des brevets

(11) Veröffentlichungsnummer: **0 344 334 A1**

(12) **EUROPÄISCHE PATENTANMELDUNG**

(21) Anmeldenummer: **88107492.6**

(22) Anmeldetag: **10.05.88**

(51) Int. Cl.⁴: **C08J 3/02 , B01F 17/00 , //C08L83/04**

(43) Veröffentlichungstag der Anmeldung: **06.12.89 Patentblatt 89/49**

(84) Benannte Vertragsstaaten: **AT BE CH DE FR GB IT LI NL**

(71) Anmelder: **WACKER-CHEMIE GMBH**
**Prinzregentenstrasse 22**
**D-8000 München 22(DE)**

(72) Erfinder: **Michel, Ulrich, Dr. Dipl.-Chem.**
**Marktler Strasse 76**
**D-8263 Burghausen(DE)**

(54) **Verfahren zur Herstellung von nicht korrosiven wässrigen Emulsionen auf Basis von Organopolysiloxanen.**

(57) Die Erfindung betrifft ein Verfahren zur Herstellung von nicht korrosiven, wässrigen Emulsionen auf Basis bon Organopolysiloxanen, wobei als Emulgator Verbindungen der allgemeinen Formeln

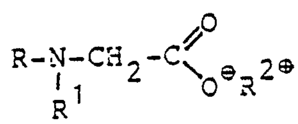

und/oder

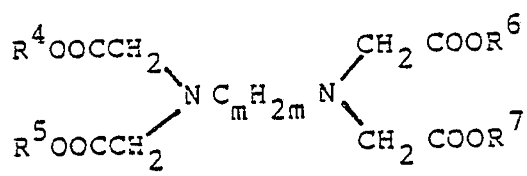

umgesetzt werden.

EP 0 344 334 A1

## Verfahren zur Herstellung von nicht korrosiven wässrigen Emulsionen auf Basis von Organopolysiloxanen

Wässrige Emulsionen auf Basis von Organopolysiloxanen finden Verwendung als Trennmittel, Gleitmittel, zur Hydrophobierung organischer und mineralischer Untergründe und zur Textilveredelung.

Bei allen diesen Anwendungen stehen die wässrigen Formulierungen im Kontakt mit Eisen oder Buntmetallen, die anfällig gegen Korrosion sind.

Bei bekannten Verfahren zur Herstellung von nicht korrosiven, wässrigen Emulsionen auf Basis von Organopolysiloxanen wird die Korrosion durch den Zusatz von Natriumnitrit, organischen Aminen oder Inhibitoren auf Basis von Natriumbenzoaten vermindert. Beim Zusatz von Natriumnitrit zu den in Rede stehenden Emulsionen bilden sich bei der Zugabe von tertiären Aminen, was in der täglichen Praxis häufig der Fall ist, da die Emulsionen auf Basis von Polysiloxanen häufig mit anderen wässrigen Formulierungen eingesetzt werden, nachteiligerweise Nitrosamine. Der Zusatz von organischen Aminen bzw. von Salzen der Benzoesäure und deren Derivaten ist gleichbedeutend mit Hilfsstoffen, die zur Stabilisierung der Formulierung nicht beitragen, sondern vielmehr der Applikation eher störend wirken. Weiter bilden organische Amine mit vielen Metallionen gefärbte Komplexe, die das optische Erscheinungsbild deutlich stören.

Aufgabe der Erfindung ist wässrige Emulsionen auf Basis von Organopolysiloxanen herzustellen unter Vermeidung dieser Nachteile.

Gelöst wird diese Aufgabe durch ein Verfahren zur Herstellung von nicht korrosiven, wässrigen Emulsionen auf Basis von Organopolysiloxanen, dadurch gekennzeichnet, daß als Emulgator Verbindungen der allgemeinen Formeln (I)

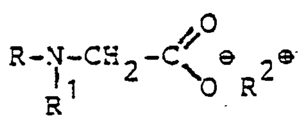

(I)

wobei

R ein aliphatischer, gesättigter oder ungesättigter Alkylcarbonylrest einer Carbonsäure mit 5 bis 30 Kohlen stoffatomen oder ein gesättigter oder ungesättigter Alkylphenylcarbonylrest mit einer Kettenlänge des Alkylrestes von 2 bis 20 Kohlenstoffatomen,

$R^1$ ein Wasserstoff- oder Methylrest,

$R^{2\oplus}$ ein Alkalimetallkation oder ein Ammoniumion der allgemeinen Formel

$H_{4-n}N^{\oplus}R^3_n$

wobei $R^3$ jeweils unabhängig voneinander ein ggf. hydroxylierter Alkylrest mit 1 bis 20 Kohlenstoffatomen oder ein Rest der allgemeinen Formel $-(C_yH_{2y}O)_xH$ mit $x = 1$ bis 10, $y = 2$ oder 3 und

n gleich 0, 1, 2 oder 3 sein können.

und/oder (II)

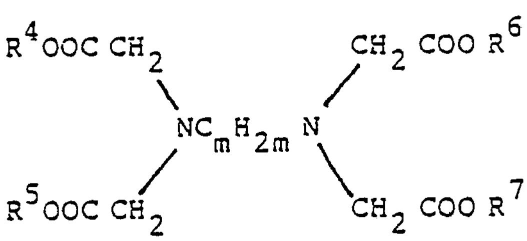

(II)

wobei

$R^4$ als Alkalimetall- oder Erdalkalimetallkation mit der Carboxylfunktion ein Salz bildet,

$R^5$ ein aliphatischer, gesättigter oder ungesättigter Alkylrest mit 5 bis 30 Kohlenstoffatomen oder Alkylphenylrest mit 5 bis 30 Kohlenstoffatomen sein kann,

$R^6$ und $R^7$ jeweils unabhängig voneinander als Alkalimetall-oder Erdalkalimetallkation mit der Carboxylfunktion ein Salz bilden können oder ein aliphatischer, gesättigter oder ungesättigter Alkylrest mit 5 bis 30 Kohlenstoffatomen oder ein Alkylphenylrest mit 5 bis 30 Kohlenstoffatomen sein können und

m innerhalb der Grenzen von 2 bis 12 liegt,

eingesetzt werden.

Die erfindungsgemäß eingesetzten Emulgatoren schützen die Metalloberfläche durch Passivierung und sie Komplexieren schädliche Metallionen.

Beispiele für Carbonsäuren mit 5 bis 30 Kohlenstoffatomen, aus denen die Reste R in den erfindungsgemäß eingesetzten Emulgatoren resultieren, sind die Octansäure, auch Caprylsäure genannt, die Decansäure, auch Caprinsäure genannt, die Undecansäure, auch Laurinsäure genannt, die Tetradecansäure, auch Myristinsäure genannt, die Hexadecansäure, auch Palmitinsäure genannt, die cis-9-Hexadecensäure, auch Palmitoleinsäure genannt, die Octadecansäure, auch Stearinsäure genannt, die Octadecensäure, auch Oleinsäure genannt, die cis-9, cis-12-octadecadiensäure, auch Linolsäure genannt, die cis-9, cis-12, cis-15-Octadecatriensäure, auch Linolensäure genannt, die cis-9, trans-11, trans-13-Octadecatriensäure, auch Eläostearinsäure genannt, die 12-Hydroxi-cis-9-octadecensäure, auch Ricinolsäure genannt, die Eikonsansäure, auch Arachinsäure genannt, die Dokosansäure, auch Behensäure genannt, und die Tetrakosansäure, auch Lignocerinsäure genannt.

Weitere Beispiele für Carbonsäuren, aus denen die Reste R resultieren, sind synthetisch hergestellte Carbonsäuren mit geradzahliger oder ungeradzahliger Kohlenstoffzahl wie n-Nonan-, i-Nonan-, n-Dodecan-, i-Dodecan-, n-Tridecan- und i-Tridecansäure.

Es können natürlich auch Gemische von Verbindungen der allgemeinen Formel I erfindungsgemäß als Emulgatoren eingesetzt werden. Solche Gemische ergeben sich beispielsweise bei der Verwendung natürlich vorkommender Fettsäuregemische als Ausgangsverbindungen für die Reste R.

Beispiele für solche natürlich anfallende Gemische sind unter den Namen

Kokosfettsäure mit Anteilen von 44-55% Laurinsäure, 13-18% Myristinsäure, 8-10% Palmitinsäure, 6-9% Caprylsäure, 6-10% Caprinsäure, 5-8% Oleinsäure, 1-3% Stearinsäure, 0-2% Linolsäure und 0-1% Capronsäure,

Talgfettsäure mit Anteilen von 1-6 % Myristinsäure, 20-37 % Palmitinsäure, 6.40 % Stearinsäure, 20-50 % Oleinsäure und 0-5% Linolsäure, 1-9 % Palmitoleinsäure, 0-3 % Linolensäure und

Sojaölfettsäure mit Anteilen von 7-12 % Palmitinsäure, 2-3 % Stearinsäure, 20-30 % Oleinsäure, 48-58 % Linolsäure, 4-10 % Linoleinsäure und 0-3 % Arachinsäure bekannt.

Hierbei beziehen sich Angaben in % auf Gew.-% bezogen auf die Gesamtmenge.

Beispiele für $R^{2+}$ sind $Na^+$, $K^+$, $NH_4^+$, für $R^3$ der Methyl-, Ethyl-, n-Propyl- und iso-Propylreste sowie $-CH_2CH_2OH$, $-CH_2CH(OH)CH_3$ und $-CH_2CH_2CH_2OH$, für $R^4$ $Na^+$, $K^+$, für $R^5$ Dodecylrest, auch Laurylrest genannt, cis-9-Octadecenylrest, auch Oleylrest genannt, Octadecylrest, auch Stearylrest genannt, Hexadecylrest, auch Palmitylrest genannt, Tetradecylrest, auch Myristylrest genannt und Isotridecylrest, sowie Gemische der Alkylreste mit dem Kohlenstoffgerüst derjenigen Alkohole, die anfallen, wenn die oben genannten Fettsäuren wie Kokosfettsäure, Talgfettsäure und Sojafettsäure zu den entsprechenden Alkoholen reduziert werden. Die für $R^4$ und $R^5$ genannten Beispiele gelten in vollem Umfang für $R^6$ und $R^7$.

Bevorzugte Reste weisen bei Alkylcarbonyl-, Alkyl- und Alkylphenylresten 12-18 Kohlenstoffatome und bei Alkylphenylcarbonylresten eine Kettenlänge des Alkylrestes von 4 bis 12 Kohlenstoffatomen auf.

Bevorzugt werden Emulgatoren mit Kalium- oder Natrium-kationen, sowie Monoethanolammoniumkationen oder Triethanolammoniumkationen eingesetzt.

Die erfindungsgemäß verwendeten Emulgatoren können für sich alleine, als Mischungen untereinander oder im Gemisch mit anderen nicht ionogenen Tensiden, wie Polyethylenglykolethern von Alkanolen, beispielsweise Dodecanol-polyethylenglykol(10)ether, Isotridecanolpolyethylenglycol(15)ether, Dodecanolpolyethylenglykol(12)ether, Trimethylnonanolpolyethylenglykol(10)ether, oder Polyethylenglykolethern von Alkylphenolen beispielsweise Isooctylphenolpolyethylenglykol(10)ether, Isononylphenylpolyethylenglykol(10)ether, oder anionischen Tensiden wie Alkylsulfaten und Alkylsulfonaten, wobei der Alkylrest aus 12 bis 18 Kohlenstoffatomen bestehen kann, beispielsweise Dodecylsulfat, Dodecylsulfonat oder sogenannte Alkylethersulfate, wie Natriumdodecanoltriethylenglykolsulfat, eingesetzt werden.

Die nach dem erfindungsgemäßen Verfahren hergestellten Emulsionen auf Basis von Organopolysiloxanen enthalten vorzugsweise Organopolysiloxane mit endständigen SiOH-Gruppen bzw. Trimethylsilylgruppen und an Silicium gebundene Alkylgruppen mit 1 bis 20 Kohlenstoffatomen, Phenylgruppen, Alkylphenylgruppen, Aminoalkylgruppen wie die 3-Aminopropylgruppe oder die 4,7-Diazaheptylgruppe und/oder Epoxygruppen-enthaltende Reste, wie den Glycidetherrest oder Polyglycolether des Polyethylen-glycols sowie des Polypropylenglycols oder deren Copolyether.

Die Organosiloxane können auch niedermolekulare Copolymere vom Harztyp sein, in denen Einheiten der Struktur $RSiO'_{3/2}$ oder $SiO_{4/2}$ enthalten sind, wobei R ein Methylrest, ein Alkylrest mit 2 bis 20 Kohlenstoffatomen, ein Vinylrest oder ein Phenylrest sein kann.

Die verwendeten Organopolysiloxane sind handelsübliche Verbindungen, beziehungsweise durch einfache Verfahren leicht zugänglich. Eine Übersicht über herkömmliche Verfahren ist in W. Noll, Chemistry and Technology of Silicones, Academic Press Inc. Orlando 1968, gegeben.

Bei einer bevorzugten Ausführungsform des erfindungsgemäßen Verfahrens werden auf 100 Gewichtsteile Organopolysiloxan 5 bis 35 Gewichtsteile, insbesondere 10 bis 18 Gewichsteile Emulgator, wovon 5 bis 100 Gew.-%, insbesondere 10 bis 20 Gew.-% erfindungsgemäß eingesetzte Emulgatoren sind, und 50 bis 900 Gewichtsteile, insbesondere 100 bis 150 Gewichtsteile Wasser zugegeben und in einem schnellaufenden Dispergierorgan emulgiert.

Als Dispergierorgane finden vorzugsweise solche vom Typ der Rotorstatormaschinen, der Kolloidmühlen oder der Flügelrührer sowie Hochdruckhomogenisatoren oder Ultraschallhomogenisatoren Verwendung.

Die erfindungsgemäß hergestellten Emulsionen auf Basis von Organopolysiloxanen werden bevorzugt dort eingesetzt, wo in Gegenwart wässriger Formulierungen mit Korrosion zu rechnen ist, beispielsweise beim Einsatz als Gleit- und Trennmedium im Rückbefeuchtungswasser im Offsetzdruckbereich, bei der Verwendung als Bestandteil einer Formulierung, die aus metallischen Aerosolbehältern verarbeitet werden soll oder als Bestandteil von Polituren, die auf wässriger Basis erstellt werden.

Beispiele 1 - 3 (Vergleichsbeispiele)

350 Gewichsteile Dimethylpolysiloxan mit terminalen Trimethylsilylgruppen mit einer Viskosität von 1000 $mm^2$/sec bei 25° C wurden mit 40 Gewichtsteilen der in Tabelle 1 angegebenen Emulgatoren versetzt und homogenisiert. Anschließend wurde mit der auf 1000 Gewichtsteile fehlenden Menge Wasser verdünnt. Die so erhaltenen Emulsionen wurden in ein offenes Becherglas gefüllt, auf dessen Grund sich zwei polierte 1 x 1 cm große Plättchen aus Kupfer bzw. Schwarzblech befanden. Die Plättchen bzw. die Emulsionen wurden nach den angegebenen Zeiten auf ihr Aussehen hin überprüft.

Tabelle 1

| Beispiel | Emulgator | weitere Zusatz/Menge | | Aussehen der Metallplatten nach | | | Aussehen der Emulsion nach | | |
|---|---|---|---|---|---|---|---|---|---|
| | | | | 1d | 7d | 21d | 1d | 7d | 21d |
| 1 | Cocosalkanolpolyethylen glykol(10)ether | - | Cu | + | - | - | braun | | |
| | | | Fe | - | - | - | milchig mit Flocken | | |
| 2 | Cocosalkanolpolyethylen glykol(10)ether | Monoethanolamin 5 Teile | Cu | + | + | + | + | blau | |
| 3 | Cocosalkanolpolyethylen glykol(10)ether | Natriumbenzoat 3 Teile | Cu | + | + | + | + | + | + |
| | | | Fe | + | + | + | + | + | + |

\+ steht für unveränderten Zustand
\- steht für Korrosion

Cocosalkanol ist ein Gemisch von Alkanolen der Zusammensetzung:

| | |
|---|---|
| 44-51% | Dodecanol |
| 13-18% | Tetradecanol |
| 8-10% | Hexadecanol |
| 6-9% | Octanol |
| 6-10% | Decanol |
| 5-8% | cis-9, Octadecenol |
| 1-3% | Octadecanol |
| 0-2% | cis-9, cis-12-Octadecadiensäure |

wobei die Zusammensetzung nach Herkunft de Rohstoffe in dem angegebenen Rahmen schwanken kann.

Beispiele 4 - 12

Beispiel 1 wurde mit der in Tabelle 2 angegebenen Menge der jeweiligen erfindungsgemäß angesetzten Emulgatoren wiederholt. Mit dem unter den Beispielen 1 bis 3 beschriebenen Test wurden auch nach 21 Tagen keine Korrosionen bzw. Veränderungen festgestellt.

Tabelle 2

| Beispiel | Emulgatormenge | Emulgator | Metallplatte |
|---|---|---|---|
| 4 | 40 Teile | N-Oleoylsarkosin-Na Salz | Cu Fe |
| 5 | 40 Teile | N-Oleoylsarkosin Triethanolammoniumsalz | Cu Fe |
| 6 | 20 Teile<br>20 Teile | Cocosalkanolpolyethylenglykol (10)-ether<br>N-Oleoylsarkosin Triethanolammoniumsalz | Cu Fe |
| 7 | 40 Teile | N-Lauroylsarkosin-Triethanolammoniumsalz | Cu Fe |
| 8 | 40 Teile | N-Cocoylsarkosin-triethanolammoniumsalz | Cu Fe |
| 9 | 20 Teile<br>20 Teile | N-Cocoylsarkosin-triethanolammoniumsalz<br>Na-Dodecylbenzolsulfonat | Cu Fe |
| 10 | 30 Teile<br>10 Teile | Cocosalkanolpolyethylenglykol (10)-ether<br>Mono/di $C_{13}$Alkanolester von EDTA-(triethanolammoniumsalz) | Fe |
| 11 | 27 Teile<br>3 Teile | Cocosalkanolpolyethylenglykol (10)-ether<br>N-Lauroylsarkosin-triethanolammoniumsalz | Cu Fe |
| 12 | 27 Teile<br>3 Teile | Cocosalkanolpolyethylenglykol (10)-ether<br>N-Lauroylsarkosin-Triethanolammoniumsalz | Cu Fe |
| EDTA entspricht Ethylendiamintetraessigsäure und der Cocoylrest entspricht hierbei in seiner Zusammensetzung oben genanntem Gemisch von Alkylcarbonylresten der Kokosfettsäure. | | | |

Beispiel 13

350 Gewichtsteile eines Cohydrolysates, das aus 80 Gewichtsteilen Dimethyldichlorsilan und 20 Gewichtsteilen Methyltrichlorsilan hergestellt wurde, wurden mit 20 Gewichtsteilen des Triethanolammoniumsalzes von N-Cocoylsarcosin (Cocoylrest vergleiche oben) gemischt und mit 40 Gewichtsteilen Wasser

versetzt und homogenisiert. Anschließend wurde mit der auf 1000 Gewichtsteile fehlenden Menge Wasser verdünnt. Mit dem unter den Beispielen 1 bis 3 beschriebenen Test wurde auch nach 21 Tagen keine Korrosion bzw. Veränderung festgestellt.

## Ansprüche

Verfahren zur Herstellung von nicht korrosiven, wässrigen Emulsionen auf Basis von Organopolysiloxanen, **dadurch gekennzeichnet,** daß als Emulgator Verbindungen der allgemeinen Formeln (I)

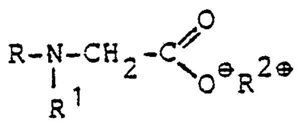

(I)

wobei

R ein aliphatischer, gesättigter oder ungesättigter Alkylcarbonylrest einer Carbonsäure mit 5 bis 30 Kohlenstoffatomen oder ein gesättigter oder ungesättigter Alkylphenylcarbonylrest mit einer Kettenlänge des Alkylrestes von 2 bis 20 Kohlenstoffatomen,

$R^1$ ein Wasserstoff- oder Methylrest,

$R^{2\oplus}$ ein Alkalimetallkation oder ein Ammoniumion der allgemeinen Formel

$H_{4-n}N^{\oplus}R^3_n$

wobei

$R^3$ jeweils unabhängig voneinander ein gegebenenfalls hy droxylierter Alkylrest mit 1 bis 20 Kohlenstoffatomen oder ein Rest der allgemeinen Formel $-(C_yH_{2y}O)_xH$ mit $x = 1$ bis 10, $y = 2$ oder 3 und

n gleich 0, 1, 2 oder 3 sein können.

und/oder (II)

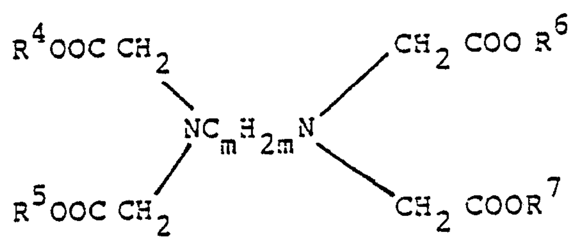

(II)

wobei

$R^4$ als Alkalimetall- oder Erdalkalimetallkation mit der Carboxylfunktion ein Salz bildet,

$R^5$ ein aliphatischer, gesättigter oder ungesättigter Alkylrest mit 5 bis 30 Kohlenstoffatomen oder Alkylphenylrest mit 5 bis 30 Kohlenstoffatomen sein kann,

$R^6$ und $R^7$ jeweils unabhängig voneinander als Alkalimetall oder Erdalkalimetallkation mit der Carboxylfunktion ein ein Salz bilden können oder ein aliphatischer, gesättigter oder ungesättigter Alkylrest mit 5 bis 30 Kohlenstoffatomen oder ein Alkylphenylrest mit 5 bis 30 Kohlenstoffatomen sein können und

m innerhalb der Grenzen von 2 bis 12 liegt,

eingesetzt werden.

Europäisches Patentamt

# EUROPÄISCHER RECHERCHENBERICHT

Nummer der Anmeldung

EP 88 10 7492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 336 926 (UNILEVER N.V.)<br>* Anspruch; Unteranspruch 5 *<br>--- | 1 | C 08 J 3/02<br>B 01 F 17/00 //<br>C 08 L 83/04 |
| Y | CH-A- 524 712 (RHONE POULENC S.A.)<br>* Anspruch; Unteransprüche 1,2 *<br>--- | 1 | |
| A | WO-A-8 000 921 (ELF AQUITAINE)<br>* Ansprüche 1-5 *<br>----- | 1 | |
| | | | **RECHERCHIERTE SACHGEBIETE (Int. Cl.4)** |
| | | | C 08 J<br>C 08 K<br>B 01 F |

Der vorliegende Recherchenbericht wurde für alle Patentansprüche erstellt

| Recherchenort | Abschlußdatum der Recherche | Prüfer |
|---|---|---|
| DEN HAAG | 12-01-1989 | OUDOT R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)